# EUROPÄISCHE PATENTSCHRIFT

(11) **EP 3 115 240 B1**
(45) Veröffentlichungstag und Bekanntmachung des Hinweises auf die Patenterteilung: **17.03.2021**
(21) Anmeldenummer: 16175357.9
(22) Anmeldetag: 20.06.2016
(51) Int. Cl.: B60J 10/27

(54) **DICHTUNGSPENDELPROFIL**
SEAL PENDULUM PROFILE
COUCHE PROFILE OSCILLANT

(30) Priorität: 23.06.2015 DE 202015103300 U
(43) Veröffentlichungstag der Anmeldung: 11.01.2017
(73) Patentinhaber: GUMMI-WELZ GmbH u. Co. KG GUMMI-KUNSTSTOFFTECHNIK-SCHAUMSTOFFE, 89231 Neu-Ulm (DE)
(72) Erfinder: GREIN, Horst, 34637 Schrecksbach (DE)
(74) Vertreter: Ter Meer Steinmeister & Partner

(56) Entgegenhaltungen:
- WO-A1-2008/147833
- DE-A1-102005 060 976
- DE-U1-202006 000 858
- JP-A- S6 175 016
- US-A1- 2002 129 558

## Beschreibung

Die Erfindung betrifft ein Dichtungsprofil zum Einsatz im Portal-/Türbereich von Nutzfahrzeugen.

Während der Auf- und Zubewegung von Türflügeln kann es je nach Einbausituation zu einem Kontakt oder einer Druckbeaufschlagung mit zu Dichtungs-, Dämpfungs- oder Stabilisierungszwecken vorgesehenen Dichtungsprofilen und den entsprechenden Türflügeln bzw. Portalen kommen. Aufgrund der Bewegungskinematik kann der Türflügel an einem Profil oder das an der Tür montierte Profil am Portal entlanglaufen, wobei es zu Materialabrieb am Profil kommt. Zur Vermeidung oder Reduzierung des Eingriffs Türflügel - Dichtungsprofil Portal sind verschiedene Maßnahmen getroffen worden.

An einem Schwenktürflügel gemäß DE 80 09 490 U1 ist unten eine Abdichtleiste verbiegbar oder abknickbar angeordnet. Unterhalb der Abknickstelle der Abdichtleiste ist ein Schwenkarm verschwenkbar angebracht. Ein Hinausschwingen der Abdichtleiste über die Normalstellung hinaus wird durch einen Anschlag verhindert.

In der DE 200 00 873 U1 ist ein Schwenktürflügel für Fahrzeuge beschrieben, der an der Unterkante eine um z.B. 90° schwenkbar angeordnete Abdichtleiste aus beispielsweise Aluminium aufweist. Die Abdichtleiste ist der Unterkante mit einem Dichtungsblatt aus Elastomermaterial versehen.

Ein aus der EP 0 873 898 B1 bekannter Schwenktürflügel weist an der Unterkante eine schwenkbar, d.h. hochklappbar angebrachte Abdichtleiste aus gummielastischem oder Kunststoffmaterial auf. Zum Herbeiführen der Schwenkbewegung kann die Abdichtleiste eine Schwächungsstelle ihrer Materialstärke aufweisen. Infolge des Umbiegens um praktisch 90° ergibt sich eine hohe Materialbeanspruchung. Zur Begrenzung der Schwenkbewegung der Abdichtleiste kann das Türblatt mit einem Überstand als Anschlag versehen sein.

Zur Verbesserung der Türflügelstabilität in der Schließstellung wird in der DE 10 2004 053 753 B4 vorgeschlagen, ein ausfahrbares Abstützelement vorzusehen, das den geschlossenen Türflügel gegen Türrahmen und Trittbrett verspannt.

JPS6175016 A beschreibt ein Dichtungsprofil für Tür- / Portalbereiche von Fahrzeugen. Dieses Dichtungsprofil zeigt einen zu verankernden Fußbereich, der unmittelbar Teil eines sich anschließenden weiteren Bereichs ist. Dieser weitere Bereich weist zwei Schenkel auf, welche unmittelbar mit dem Fußbereich verbunden sind. Zusammen bilden der Fußbereich und der sich anschließende Bereich eine Hohlkammer. Im Übergangsbereich vom Fußbereich zum sich anschließenden Bereich sind Knickstellen vorgesehen, wobei sich ausgehend von den beiden Knickstellen die zwei Schenkel entgegengesetzt zum Fußbereich verbreitern, um bei einem äußeren Eckbereich zusammengeführt zu werden.

WO 2008/147833 A1 beschreibt Körperdichtungskomponenten für eine Automobiltür und insbesondere Komponenten mit einer Dichtungsanordnung, welche eine innere Verkleidungsplatte aufweisen. Das Seitenprofil der sich ergebenden umlaufenden bzw. abstehenden Schenkel weisen jeweils gleichdicke Wandstärken auf.

DE 20 2006 000 858 U1 beschreibt eine Fingerschutzleiste für Innenschwenktüren, die aus einer gummielastischen Profilleiste besteht. An einen Fußbereich schließt sich unmittelbar eine Hohlkammer B an, wobei die begrenzenden Schenkel direkt von dem Fußbereich hervorgehen und eine gleichdicke Wandstärke aufweisen. Getrennt durch einen Verbindungsschenkel schließt sich von der ersten Hohlkammer B eine zweite Hohlkammer A an, wobei sich an diese zweite Hohlkammer A eine Dichtungslippe anschließt. Die Schenkel von den beiden Hohlkammern weisen dabei sich unterscheidende Wandstärken auf.

US 2002/0129558 A1 beschreibt eine schallisolierende Wetterleiste für Automobile, die einen Fußbereich aufweist, an den sich unmittelbar zwei Schenkel anschließen, welche wiederum eine Hohlkammer bilden. Die Wandstärke der die Hohlkammer umlaufenden Schenkel ist dabei gleich dick.

DE 10 2005 060976 A1 beschreibt eine Dichtung zum Abdichten eines Spalts zwischen einem ersten Bauteil und einem zweiten Bauteil, die einen Dichtungsabschnitt und einen Befestigungsabschnitt umfasst. Der Dichtungsabschnitt verfügt über ein distales Ende, das an dem ersten Bauteil anlegbar ist, und ein proximales Ende, das mit dem Befestigungsabschnitt verbunden ist.

Bei Innenschwenktüren werden des Weiteren beispielsweise an der Portalseite Profile eingebaut, die relativ starr sind und nur auf Biegung ausgelegt sind. Bei Druckkontakt mit dem sich bewegenden Türflügel geben die Profile in einem begrenzten Umfang (ca. maximal 2 cm) nach, um die Bewegung zu ermöglichen und den Verschleiß herabzusetzen. Hierzu müssen die Profile mit Vorspannung ausgelegt sein, so dass sie nach der Druckbeaufschlagung mit dem an dem Profil entlanglaufenden Türflügel wieder die Ausgangsposition einnehmen. Indessen bewirkt bzw. unterstützt die der durch die Tür ausgeübte Kraft entgegenwirkende Vorspannung einen Abrieb der Profile.

Der Erfindung liegt die Aufgabe zugrunde, ein Dichtungsprofil für den Portal-/Türbereich zu schaffen, das sich durch einen geringen Materialverschleiß auszeichnet.

Diese Aufgabe ist durch die Erfindung bei einem Dichtungsprofil mit den Merkmalen des Anspruchs 1 gelöst. Vorteilhafte Weiterbildungen des erfindungsgemäßen Dichtungsprofils sind Gegenstand der abhängigen Ansprüche.

Ein Dichtungsprofil gemäß der Erfindung, das insbesondere für den Tür-/Portalbereich von Fahrzeugen vorgesehen ist, umfasst einen fest verankerten Fußbereich, einen mittleren Bereich und einen vorderen Bereich mit einer Dichtlippe. Das Dichtungsprofil ist im mittleren Bereich mit zumindest einer langgestreckten, von zwei Schenkeln umgrenzten, inneren Hohlkammer ausgebildet und mit zumindest einer Knickstelle ausgestattet derart, dass das Dichtungsprofil im mittleren Bereich seitlich in zumindest eine Richtung auslenkbar ist.

Die in den beiden Schenkeln vorgesehenen Knickstellen erleichtern ein Auslenken des Dichtungsprofils im Fall einer auf dieses einwirkenden Kraft, wobei durch die Knickstellen die Biegestelle und somit auch der Hebelarm definiert ist. Zugleich übt jeweils der der Auslenkrichtung gegenüberliegende Schenkel eine Rückstellkraft aus, die zur Rückführung des ausgelenkten Dichtungsprofils in die Normalposition beiträgt. Infolge der vergleichsweise geringen Kraft, die zu einer Auslenkung des Dichtungsprofils benötigt wird, lässt sich dieses leicht aus der Normalstellung auslenken. Die Bewegung aus der Normalposition in beide Richtungen und die jeweilige Zurückbewegung erfolgen dementsprechend leicht und mit wenig Gegenkraft, ähnlich wie die Hin- und Herbewegung bei einer Schaukel oder eines Pendels, weswegen das Dichtungsprofil in der Anwendung als schaukelnde Dichtung oder Pendelprofil bezeichnet wird.

Das Dichtungsprofil gemäß der Erfindung wird im Folgenden weitgehend als an der Portalseite vorgesehen beschrieben. Dies erfolgt jedoch lediglich aus Zweckmäßigkeitsgründen der Darstellung. Das Dichtungsprofil kann ebenso auf der Türseite vorgesehen sein. Des Weiteren bezieht sich die Darstellung auf den Einsatz bei Nutzfahrzeugen. Grundsätzlich kann das Dichtungsprofil auch an anderen Orten mit ähnlicher Kinematik eingesetzt werden.

Bevorzugt ist das Dichtungsprofil gemäß der Erfindung aus Gummi- oder Elastomermaterial. Es sind auch andere Materialien möglich, sofern sie die notwendigen Festigkeits- und Elastizitätseigenschaften haben und für den jeweiligen Einsatz geeignet sind (z. B. geeignet temperaturfest, etc.).

Vorteilhaft ist ein Schenkel zwischen dem Fußbereich und dem Bereich der Knickstelle mit einer starren Führung versehen. Auf diese Weise ergibt sich eine besonders sichere Fixierung des Dichtungsprofils, wobei die Führung im Bewegungszyklus auch Widerlagerfunktion innehat.

Bei einer Ausführungsform des erfindungsgemäßen Dichtungsprofils ist der Querschnitt des mittleren Bereichs des Dichtungsprofils ausgehend vom Fußbereich bis zu den Knickstellen etwa U-förmig. Diese Ausgestaltung unterstützt eine mehr oder weniger gleichmäßige Auslenkung des Dichtungsprofils in beide Richtungen.

Im mittleren Bereich des Dichtungsprofils ist die Wandstärke der Schenkel in dem für die Knickstellen vorgesehenen Bereich dünner, wodurch sich die Knickstellen ergeben.

Eine mögliche Ausführung zur Bildung der Knickstellen kann vorgesehen sein, indem sich die Wandstärke der Schenkel zu den Knickstellen hin verjüngt. Die Verjüngung ist so ausgebildet, dass sich die Wandstärke der Schenkel vom Fußbereich bis zu den Knickstellen verjüngt. Im Anschluss kann die Wandstärke eines oder beider Schenkel wieder zunehmen.

Statt einer Hohlkammer können auch mehrere, z.B. zwei Hohlkammern, vorgesehen sein oder die Hohlkammer unterteilt sein.

Zur Erleichterung der Auslenkung des Dichtungsprofils kann einer der Schenkel eine geringere Wandstärke als der andere Schenkel aufweisen.

Bei einem Ausführungsbeispiel der Erfindung ist ein Schenkel am anderen angelenkt. Durch die Anlenkung sind beide Schenkel gekoppelt und werden somit bei Krafteinwirkung zusammen aus der Normalposition bewegt. Der angelenkte Schenkel unterstützt bei Beendigung der Krafteinwirkung oder bei Hubende die Rückbewegung in die Normalposition. Die Dichtlippe ist bei einer Ausführung des Dichtungsprofils anschließend an einen Schenkel ausgebildet und bildet somit eine Fortsetzung desselben.

Die Erfindung wird im folgenden weiter anhand von Ausführungsbeispielen und der Zeichnung beschrieben. Diese Darstellung dient lediglich zu Veranschaulichungszwecken und soll die Erfindung nicht auf die konkret angegebenen Merkmalskombinationen einschränken. Es zeigen
- Fig. 1: eine schematische Schnittansicht, die ein Dichtungsprofil gemäß einem ersten Ausführungsbeispiel der Erfindung in der Normalposition darstellt,
- Fig. 2: eine Ansicht ähnlich Fig. 1, die das Dichtungsprofil zusätzlich in der in eine erste Richtung ausgelenkten Position darstellt,
- Fig. 3: eine Ansicht ähnlich Fig. 1, die das Dichtungsprofil zusätzlich in der in eine zweite Richtung entgegengesetzt ausgelenkten Position darstellt,
- Fig. 4: eine Ansicht ähnlich Fig. 1, die das Dichtungsprofil zusätzlich in der in die erste sowie in eine zweite Richtung ausgelenkten Position darstellt, und
- Fig. 5: eine perspektivische Ansicht eines Anwendungsbeispiels des Dichtungsprofils gemäß einem zweiten Ausführungsbeispiel der Erfindung, die den Einbau als Portaldichtung und den Bewegungsablauf veranschaulicht.

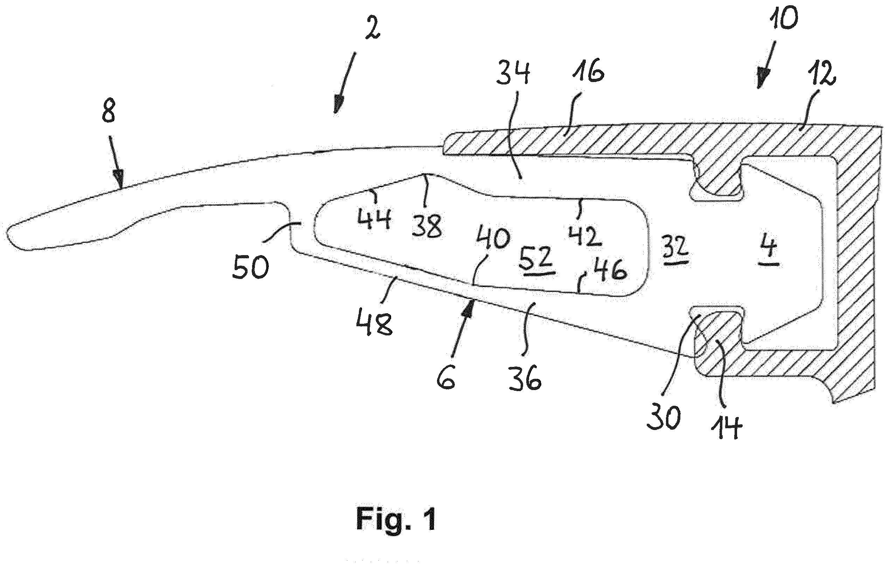

Im Folgenden wird ein erstes Ausführungsbeispiel eines erfindungsgemäßen Dichtungsprofils anhand von Fig. 1 beschrieben. Das Dichtungsprofil 2 umfasst einen Fußbereich 4, einen mittleren Bereich 6 und einen vorderen Bereich 8. Mit dem Fußbereich 4 ist das Dichtungsprofil 2 fest an einem metallenen Halteprofil 10 im Portalbereich eines Nutzfahrzeugs verankert. Der Fußbereich 4 endet in einem beidseitigen Einschnitt 30, in den an Stegen 12 sich befindende Haltevorsprünge 14 des Halteprofils 10 eingreifen. Der in Fig. 1 obere Steg 12 setzt sich plattenartig fort und der so gebildete Abschnitt stellt eine starre Führung 16 dar, deren Aufgabe noch erläutert wird.

Im Anschluss an den Fußbereich 4 hat der sich anschließende mittlere Bereich 6 zunächst eine U-Form mit einem Grundsteg 32 und zwei Schenkeln 34, 36. Der in Fig. 1 erste obere Schenkel 34 liegt an der Führung 16 an. Er hat einen Abschnitt 42 mit gleichbleibender Wandstärke bis etwas vor dem Ende der Führung 16. In dem sich anschließenden Abschnitt 44 verjüngt sich der obere Schenkel 34 auf fast die halbe Wandstärke an einer ersten Knickstelle 38, die sich kurz nach dem Ende der Führung 16 befindet und auf die später noch eingegangen wird. Im Anschluss nimmt die Wandstärke bis zum Ende des mittleren Bereichs 6 wieder auf etwa die ursprüngliche Dicke zu. Der zweite untere Schenkel 36 hat eine sich verjüngende Gestalt, wobei die Wandstärke des Abschnitts 46 stetig bis zu einer zweiten Knickstelle 40 etwa kurz vor dem Ende der gegenüberliegenden Führung 16 abnimmt. Auf diese Weise wird die Breite des Dichtungsprofils ausgehend vom Fußbereich zunehmend kleiner. Während der Verlauf der Außenseite des unteren Schenkels 36 im Abschnitt 48 nach der zweiten Knickstelle 40 stetig fortgesetzt ist, ist der Verlauf der Innenseite des unteren Schenkels in diesem Abschnitt nach oben abgebogen, so dass die Wandstärke des zweiten Schenkels 36 in dem Abschnitt 48 im Anschluss an die zweite Knickstelle 40 im Wesentlichen gleichbleibend ist. Die Enden der Schenkel 34, 36 bzw. von deren Abschnitten 44, 48 sind durch einen Quersteg 50 miteinander verbunden. An dieser Stelle ist die Wandstärke des oberen Schenkels 34 am breitesten. Durch die beiden Schenkel 34, 36, den Grundsteg 32 und den Quersteg 50 ist eine Hohlkammer 52 gebildet.

Über den Verbindungsbereich mit dem Quersteg 50 wird der obere Schenkel 34 durch die Dichtlippe 8 fortgesetzt, die etwa dieselbe Wandstärke wie der obere Schenkel 34 hat. Die Wandstärke kann jedoch auch anders, insbesondere kleiner sein, da keine großen Auslösekräfte benötigt werden.

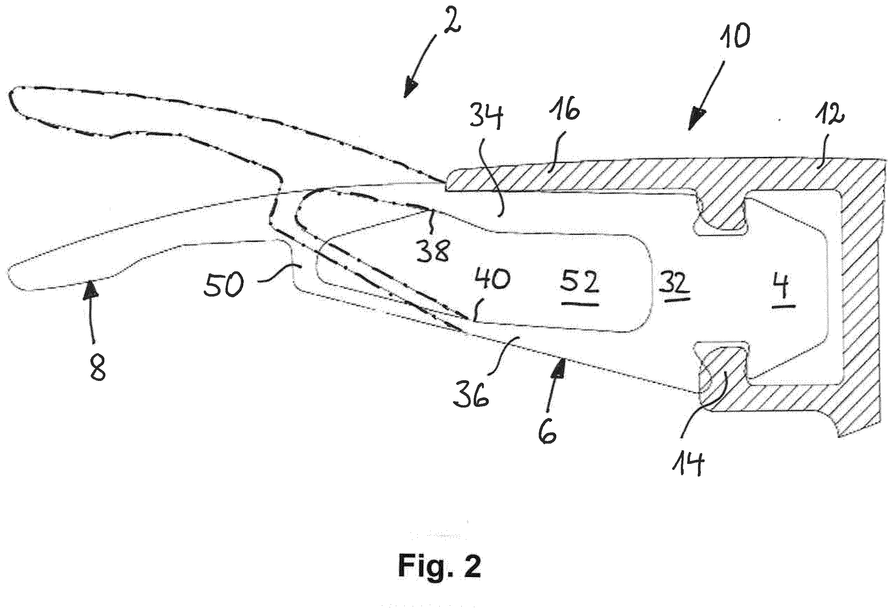

Im Folgenden wird anhand von Fig. 2 die Auslenkung des Dichtungsprofils von Fig. 1 in eine erste Richtung (gemäß der Darstellung nach oben) beschrieben. Es erfolgt eine Krafteinwirkung üblicherweise auf die Dichtlippe 8. Dies führt zu einer Auslenkung des Dichtungsprofils, d.h. der Schenkel 34, 36 um ihre durch Materialschwächung gebildeten Knickstellen 38, 40. In der strichpunktiert dargestellten ausgelenkten Position ist der Verlauf der Innenseite des oberen Schenkels 34 fast geradlinig, wobei der obere Schenkel 34 um das Ende der Führung 16 abgebogen ist. Durch die erhebliche Materialschwächung in den Knickstellen 38, 40 wird wenig Kraft benötigt, um das Dichtungsprofil auszulenken. Je nach Ausführung und Dimensionierung in den Knickbereichen können die Flexibilität und die für die Auslenkung benötigte Kraft festgelegt werden.

Die Anlenkung des zweiten unteren Schenkels 36 an den ersten oberen Schenkel 34 führt zu einer Vergrößerung der Steifigkeit des Dichtungsprofils 2. Da die Wandstärke des zweiten unteren Schenkels 36 kleiner als die des oberen Schenkels 34 ist, wird zur Auslenkung beider Schenkel nicht viel zusätzliche Kraft im Vergleich zu der für die Auslenkung des oberen Schenkels erforderlichen Kraft benötigt. Durch die Koppelung der beiden Schenkel 34, 36 ist jedoch eine Unterstützung bei der Rückbewegung in die Normalposition geliefert.

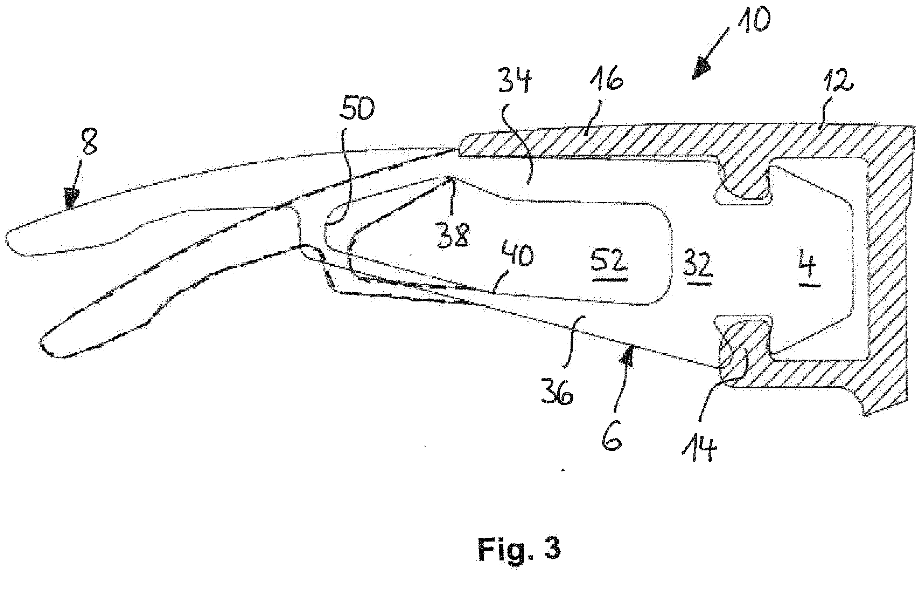

Fig. 3 veranschaulicht analog die Auslenkung des Dichtprofils von Fig. 1 in die zweite Richtung (gemäß der Darstellung nach unten). In der gestrichelt dargestellten ausgelenkten Position ist der Verlauf der Innenseite des unteren Schenkels 36 fast geradlinig. Der obere Schenkel 34 ist im Anschluss an die Führung 16 nach unten ausgelenkt. Auch bei dieser Auslenkung bewirkt die Koppelung der beiden Schenkel 34, 36 eine leichtere und schnellere Rückführung in die Normalposition.

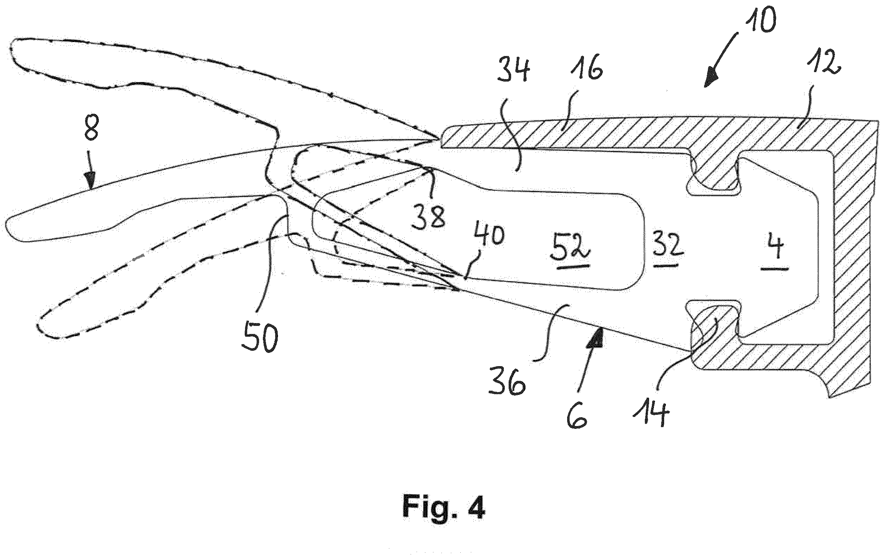

Einen Überblick über die Auslenkungen des Dichtungsprofils gibt Fig. 4, in der das Dichtungsprofil neben der Normalposition in beiden Auslenkungspositionen (oben und unten) entsprechend strichpunktiert und gestrichelt dargestellt ist.

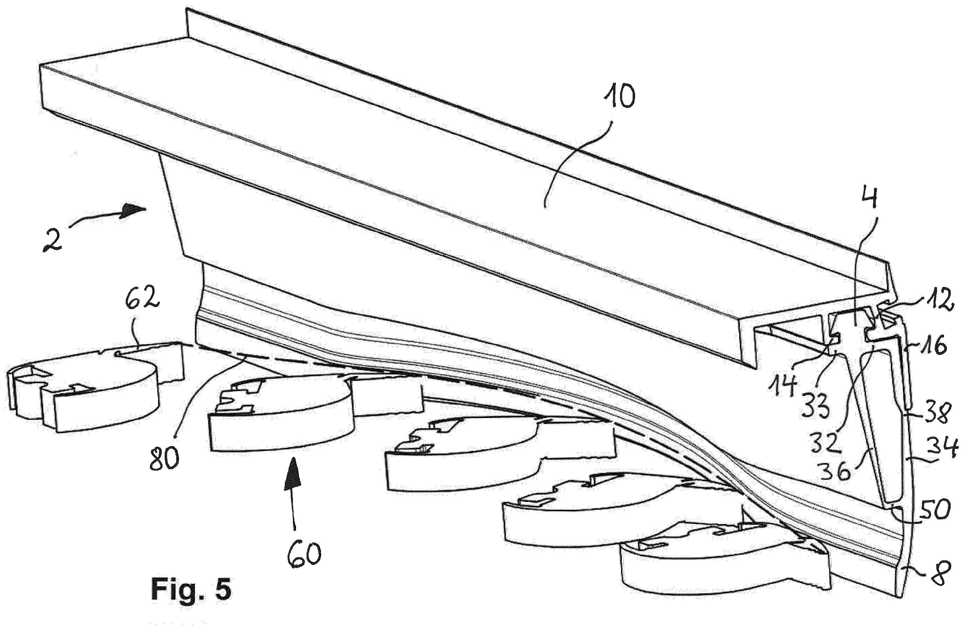

Ein zweites Ausführungsbeispiel des erfindungsgemäßen Dichtungsprofils ist in Fig. 5 dargestellt. Sofern die Teile denen des ersten Ausführungsbeispiels entsprechen, sind sie mit denselben Bezugszeichen bezeichnet. Es werden lediglich die Abweichungen beschrieben. Das Halteprofil 10 ist Teil eines nicht dargestellten Portals und umfasst nicht weiter beschriebene Flansche und Gestalt, die für die Wirkungsweise des erfindungsgemäßen Dichtungsprofils ohne Belang sind. Im Halteprofil 10 ist ein Dichtungsprofil 2 angebracht. Anders als im Fall des ersten Ausführungsbeispiels ist der Fußbereich 4 nicht mittig, sondern als Fortsetzung des zweiten Schenkels 36 angeordnet. Entsprechend anders ist das Halteprofil 10 ausgebildet und die Führung 16 ist in Bezug auf den zugehörigen Steg 12 abgekröpft. Der Grundsteg 32 ist auf der in Bezug auf den Fußbereich 4 gegenüberliegenden Seite in einem Steg 33 fortgesetzt, der an dem zugehörigen Haltesteg 14 anliegt und durch diesen abgestützt ist. Es ist nur die Knickstelle 38 des ersten Schenkels 34 ausgebildet. Der zweite Schenkel 36 hat einen durchgängigen geraden Verlauf, wobei er sich zum Ende hin verjüngt.

Zur Veranschaulichung des Bewegungsablaufs ist in der Darstellung von Fig. 5 stellvertretend für einen Türflügel einer Innenschwenktür eine Stirndichtung 60 eines Türflügels in verschiedenen Positionen während eines Bewegungsablaufs dargestellt. Der Kontaktbereich der Stirndichtung 60 liegt im Wesentlichen im Bereich von deren vorderer Dichtlippe 62. Die Bewegungsbahn des Kontaktbereichs der Innenschwenktür ist durch eine gestrichelte Bogenlinie 80 angedeutet. Das Dichtungsprofil 2 ist in den äußeren Bereichen nicht ausgelenkt dargestellt. In den mittleren Bereichen steht das Dichtungsprofil 2 mit dem Kontaktbereich der Stirndichtung, d.h. mit deren Dichtlippe 62, in Eingriff und ist von dieser fort unterschiedlich stark ausgelenkt dargestellt. Die durch die Stirndichtung 60 auf die Dichtlippe 8 ausgeübte Kraft führt lokal jeweils zu einem jeweils örtlichen Abkippen des Dichtungsprofils, wie es in Fig. 2 veranschaulicht ist.

## Patentansprüche

1. Dichtungsprofil für den Tür-/Portalbereich von Nutzfahrzeugen, umfassend einen fest verankerten Fußbereich (4), einen mittleren Bereich (6) und einen vorderen Bereich mit einer Dichtlippe (8),
wobei das Dichtungsprofil im mittleren Bereich (6) mit zumindest einer langgestreckten, von einem ersten Schenkel (34) und einem zweiten Schenkel (36) umgrenzten, inneren Hohlkammer (52) ausgebildet ist,
wobei der erste Schenkel (34) mit einer ersten Knickstelle (38) und der zweite Schenkel (36) mit einer zweiten Knickstelle (40) ausgestattet ist, wobei die Wandstärke der Schenkel (34, 36) im mittleren Bereich (6) des Dichtungsprofils (2) im Bereich um die Knickstellen (38, 40) dünner ist und sich die Wandstärke der Schenkel (34, 36) vom Fußbereich (4) bis zu den Knickstellen (38, 40) verjüngt, **dadurch gekennzeichnet, dass** die Dichtung im mittleren Bereich (6) bei seitlicher Krafteinwirkung auf die Dichtlippe (8) seitlich auslenkbar ist, wobei der erste Schenkel (34) und der zweite Schenkel (36) seitlich um die Knickstellen (36, 38) in Richtung der Auslenkung auslenkbar sind.

2. Dichtungsprofil nach Anspruch 1, **dadurch gekennzeichnet, dass** der Querschnitt des mittleren Bereichs (6) des Dichtungsprofils (2) ausgehend vom Fußbereich (4) bis zu den Knickstellen (38, 40) etwa U-förmig ist.

3. Dichtungsprofil nach einem der Ansprüche 1 oder 2, **dadurch gekennzeichnet, dass** einer der Schenkel (36) eine geringere Wandstärke als der andere Schenkel (38) aufweist.

4. Dichtungsprofil nach einem der Ansprüche 1 bis 3, **dadurch gekennzeichnet, dass** ein Schenkel (36) am anderen (34) angelenkt ist.

5. Dichtungsprofil nach einem der Ansprüche 1 bis 4, **dadurch gekennzeichnet, dass** die Dichtlippe (8) anschließend an einen Schenkel (34) ausgebildet ist.

6. Dichtungsprofil nach einem der Ansprüche 1 bis 5, **dadurch gekennzeichnet, dass** das Dichtungsprofil (2) aus Gummi- oder Elastomermaterial ist.

7. Dichtungsprofil nach einem der Ansprüche 1 bis 6, **dadurch gekennzeichnet, dass** ein Schenkel (34) zwischen dem Fußbereich (4) und dem Bereich der Knickstelle (38) mit einer starren Führung (16) versehen ist.

## Claims

1. Sealing profile for the door/portal region of commercial vehicles, comprising a firmly anchored base region (4), a central region (6) and a front region having a sealing lip (8), the sealing profile in the central region (6) having at least one elongate inner hollow chamber (52) delimited by a first leg (34) and a second leg (36), the first leg (34) being provided with a first kink (38) and the second leg (36) being provided with a second kink (40), the wall thickness of the legs (34, 36) in the central region (6) of the sealing profile (2) being thinner in the region around the kinks (38, 40) and the wall thickness of the legs (34, 36) tapering from the base region (4) to the kinks (38, 40), **characterized in that** the seal in the central region (6) can be moved laterally when the sealing lip (8) is subjected to a lateral force, the first leg (34) and the second leg (36) being movable laterally around the kinks (36, 38) in the direction of the movement.

2. Sealing profile according to claim 1, **characterized in that** the cross section of the central region (6) of the sealing profile (2) is approximately U-shaped, starting from the base region (4) to the kinks (38, 40).

3. Sealing profile according to either claim 1 or claim 2, **characterized in that** one of the legs (36) has a smaller wall thickness than the other leg (38).

4. Sealing profile according to any of claims 1 to 3, **characterized in that** one leg (36) is articulated on the other (34).

5. Sealing profile according to any of claims 1 to 4, **characterized in that** the sealing lip (8) is formed adjoining a leg (34).

6. Sealing profile according to any of claims 1 to 5, **characterized in that** the sealing profile (2) is made of rubber or elastomer material.

7. Sealing profile according to any of claims 1 to 6, **characterized in that** one leg (34) is provided with a rigid guide (16) between the base region (4) and the region of the kink (38).

## Revendications

1. Joint d'étanchéité profilé pour la zone de portière/d'ouverture de véhicules utilitaires, comportant une zone d'embase fixement ancrée (4), une zone centrale (6) et une zone avant avec une lèvre d'étanchéité (8),
dans lequel le joint d'étanchéité profilé dans la zone centrale (6) est formé avec au moins une cavité intérieure (52) s'étendant longitudinalement, délimitée par une première aile (34) et une seconde aile (36),
dans lequel la première aile (34) est pourvue d'un premier point d'inflexion (38) et la seconde aile (36) est pourvue d'un second point d'inflexion (40), dans lequel l'épaisseur de paroi des ailes (34, 36) dans la zone centrale (6) du joint d'étanchéité profilé (2) est plus petite dans la zone située autour des points d'inflexion (38, 40) et l'épaisseur de paroi des ailes (34, 36) diminue à partir de la zone d'embase (4) jusqu'aux points d'inflexion (38, 40), **caractérisé en ce que** le joint d'étanchéité dans la zone centrale (6) peut être dévié latéralement en appliquant une force latérale sur la lèvre d'étanchéité (8), dans lequel la première aile (34) et la seconde ailes (36) peuvent être déviées latéralement autour des points d'inflexion (36, 38) dans la direction de la déviation.

2. Joint d'étanchéité profilé selon la revendication 1, **caractérisé en ce que** la section transversale de la zone centrale (6) du joint d'étanchéité profilé (2) est sensiblement en forme de U à partir de la zone d'embase (4) jusqu'aux points d'inflexion (38, 40).

3. Joint d'étanchéité profilé selon l'une des revendications 1 ou 2, **caractérisé en ce que** l'une des ailes (36) a une épaisseur de paroi plus petite que l'autre aile (38).

4. Joint d'étanchéité profilé selon l'une des revendications 1 à 3, **caractérisé en ce qu'**une aile (36) est articulée sur l'autre aile (34).

5. Joint d'étanchéité profilé selon l'une des revendications 1 à 4, **caractérisé en ce que** la lèvre d'étanchéité (8) est formée adjacente à une aile (34).

6. Joint d'étanchéité profilé selon l'une des revendications 1 à 5, **caractérisé en ce que** le joint d'étanchéité profilé (2) est en caoutchouc ou en matière élastomère.

7. Joint d'étanchéité profilé selon l'une des revendications 1 à 6, **caractérisé en ce qu'**une aile (34) entre la zone d'embase (4) et la zone du point d'inflexion (38) est pourvue d'un guide rigide (16).
